# EUROPEAN PATENT APPLICATION

(11) **EP 4 546 475 A1**
(43) Date of publication of application: **30.04.2025**
(21) Application number: 23205235.7
(22) Date of filing: 23.10.2023
(51) Int. Cl.: H01M 8/2404, H01M 8/2418, H01M 8/242, H01M 8/2428, H01M 8/2432, H01M 8/249

(54) **METAL-SUPPORTED FUEL CELL STRUCTURE**

(71) Applicant: Airbus Operations GmbH, 21129 Hamburg (DE)
(72) Inventor: Ahilan, Vignesh, 21129 Hamburg (DE)

(57) **Abstract**

According to an aspect, a metal-supported fuel cell structure (100) is provided. The fuel cell structure comprises at least a two fuel cell segments (150, 160, 170, 180). Each of the at least two fuel cell segments are arranged neighboring each other. Each of the at least two fuel cell segments comprises an anode (111, 112, 113, 114), a cathode (121, 122, 123, 124), an electrolyte (131, 132, 133, 134) interposed between the corresponding anode and the corresponding cathode, and a metal-support (141, 142, 143, 144). The anodes together build an anode layer (110). The corresponding anodes of neighboring fuel cell segments are electrically isolated from each other. All the cathodes together build a cathode layer (120). The corresponding cathodes of neighboring fuel cell segment (150, 160) are electrically isolated from each other. All the metal-supports together build a mechanically stabilizing metal-support layer (140). The corresponding metal-supports of neighboring fuel cell segment are electrically isolated from each other. The anode layer, the cathode layer and the electrolyte layer are disposed on a surface of the metal-support layer. At least one cathode is electrically interconnected, via at least one electrical interconnector, with at least one anode and/or metal-support of a neighboring fuel cell segment, thereby establishing a serial connection between the at least two fuel cell segments.

## Description

### TECHNICAL FIELD

The present disclosure relates to fuel cell structures in general, and in particular to a metal-supported fuel cell structure.

### TECHNICAL BACKGROUND

Because of the technical progress, and because of their environmentally friendly creation of electrical energy, fuel cells, such as solid oxide fuel cells (SOFC) are becoming increasingly popular as alternative energy sources.

Solid oxide fuel cells (SOFC) are energy conversion devices, which use hydrogen as fuel and converts its chemical energy into electrical energy and heat. The benefit of SOFC is high electrical and thermal energy efficiency and the production of energy by non-combustion reactions, which increase safety. SOFCs are widely used for stationary application. They produce power with high fuel utilization of up to 85%. An SOFC consists of an anode, a cathode, an electrolyte, and current collecting components (interconnector). The oxygen reduction reaction occurs in the porous cathode by accepting electrons and producing oxide ions, which transfer through the gas tight electrolyte to the anode interface. The hydrogen fuel gets oxidized at the anode interface by accepting oxide ions and producing electrons, which pass to the cathode side through an external circuit. The operating temperature of SOFCs is between 600 - 900 °C, which depends on the choice of SOFC materials.

However, planar solid oxide fuel cells (SOFCs), for example, offer a relatively low gravimetric power density and high thermal stress to the cell at fast heating and cooling rates. The low gravimetric power density mainly results from the heavy bipolar plate used in the design. As such, planar SOFCs are currently mainly developed for stationary applications. In mobile applications, and for aircrafts in particular, reduction of weight is of paramount importance. Therefore, in order to keep the weight low while still providing the necessary power, increasing the gravimetric power density (being the power per weight unit) is desired.

In typical planar SOFCs having an oxide conducting ceramic electrolyte covered with a negative electrode (anode) on the fuel side and with a positive electrode (cathode) on the air side, metallic interconnectors (which act as current collectors) at the outsides of each cell are used to electrically connect each cell to another cell and to separate the fuel from the oxidizer channel (air gas channel) of two adjacent cells, in order to build a fuel cell stack. The electrical current thereby is transferred in a perpendicular direction of the cell area. The interconnectors can take up to 70% of the total weight of such a planar stack.

Tubular cell designs, for example, do not rely on such heavy interconnectors and therefore offer optimization potential with regard to the gravimetric power density, such solutions implement current collection in the longitudinal or circular direction and along the in-plane cross section of the cell. However, such current collection mechanism causes higher current losses compared to planar concepts (partly because of the long distances the electrons have to travel). This results in low gravimetric power densities.

### DESCRIPTION

It is an objective to provide an integrated fuel cell structure having a high gravimetric power density and high mechanical strength while reducing manufacturing challenges.

This objective is solved by the subject matter of the independent claims. Further embodiments are described in the dependent claims as well as in the following description.

According to an aspect, a metal-supported fuel cell structure is provided. The fuel cell structure comprises at least a two fuel cell segments. Each of the at least two fuel cell segments are arranged neighboring each other. Each of the at least two fuel cell segments comprises an anode, a cathode, an electrolyte interposed between the corresponding anode and the corresponding cathode, and a metal-support. All the anodes together build an anode layer. The corresponding anodes of neighboring fuel cell segments within the anode layer are electrically isolated from each other. All the cathodes together build a cathode layer. The corresponding cathodes of neighboring fuel cell segment within the cathode layer are electrically isolated from each other. All the electrolytes together build an electrolyte layer. All the metal-supports together build a metal-support layer. The corresponding metal-supports of neighboring fuel cell segment within the metal-support layer are electrically isolated from each other. The metal-support layer provides a mechanical support for the fuel cell structure. The anode layer, the cathode layer and the electrolyte layer are disposed on a surface of the metal-support layer. The cathode or the anode of at least one of the fuel cell segments is electrically interconnected, via at least one electrical interconnector, with the anode or the cathode, respectively, and/or the metal-support of a neighboring fuel cell segment, thereby establishing a serial connection between the corresponding fuel cell segments.

This arrangement provides a fuel cell structure that consists of several fuel cell segments (i.e., fully functional fuel cells) that are interconnected in a serial configuration. Each of the fuel cell segments is supported by a metal-support made from a metallic material and the metal-supports are arranged adjacent to each other. In particular, the single fuel cell segments are not stacked on top of each other, like multiple cells of a planar fuel cell stack, e.g. They are rather arranged side-by-side with each other in a common plane. Therefore, the heavy-weight bipolar plates between the single fuel cells in a regular fuel cell stack can be omitted, thereby reducing weight of the structure and increasing the gravimetric power density. Neighboring metal-supports are arranged next to each other but are electrically isolated with regard to each other.

A "layer", as used herein, describes an arrangement of the corresponding components (anodes, cathodes, electrolyte, metal-supports) in a common plane side-by-side. It should, however, be appreciated that the term "layer" or "plane" does not necessarily mean that it is a flat plane, but such a plane could also have a curvature in some embodiments, such that the layer, for example, builds a shell-like structure of a tube, as described further below. Also, the term "layer/plane" does not mean that it is a continuous layer (wherein each point within the layer is in some way connected to each other point within the layer) but rather only refers to the relative spatial relationship of components within the layer. For example, two anodes within one layer are not connected with each other but are only spatially arranged neighboring each other within the layer (in this example, the anode layer).

Electrical isolation between neighboring components within a corresponding layer (e.g., between neighboring anodes, i.e., between a first anode of a first fuel cell segment and a second anode of a second fuel cell segment, or between neighboring cathodes, i.e., between a first cathode of a first fuel cell segment and a second cathode of a second fuel cell segment) means that these components are not touching each other and that there is no direct electrical connection between the corresponding components. Therefore, there is, for example, no direct electrical interconnection between a first anode and a second anode, between a first cathode and a second cathode, etc.

Therefore, neighboring anodes, neighboring cathodes, and neighboring metal-supports are each arranged in a common layer side-by-side but are not in direct electrical contact with each other. Each of the anodes/cathodes/metal-supports are therefore, although they are located in a common layer, separate anodes/cathodes/metal-supports, respectively.

The anode layer, the cathode layer and the electrolyte layer are disposed on a surface of the metal-support layer. In particular, this means that all the anodes (of the at least two fuel cell segments) are located in a common plane parallel to the cathode layer (or concentric to the anode layer in tubular embodiments, as described further below) and all the electrolytes (of the at least two fuel cell segments) are located in a common plane parallel to the anode layer and the cathode layer (or concentric to the anode layer and the cathode layer in tubular embodiments, as described further below), and the electrolyte layer is arranged/interposed (i.e., sandwiched) between the anode layer and the cathode layer. This arrangement of the anode layer, the electrolyte layer, and the cathode layer is disposed on a surface of the metal-support layer.

In other words, each one of the anodes, cathodes and electrolytes build a single fuel cell that is supported by a corresponding one of the metal-supports, wherein either the anode or the cathode of the corresponding fuel cell segment is in direct contact with the corresponding metal-support. These single fuel cells are arranged next to each other (but not stacked), such that they are arranged side-by-side.

Each of the anode layer, the electrolyte layer, the cathode layer, and the metal-support layer may extend in a first direction and a second direction. The first direction and the second direction may, for example, be a length and a width direction in a planar embodiment, or the circumferential direction and the longitudinal (or axial) direction in tubular embodiments. However, other configurations are conceivable, too.

The metal-supports each are made of a metallic material and are in contact with either the corresponding anode or the corresponding cathode. Therefore, the metal-supports, simultaneously to providing mechanical support, act as current collectors for the corresponding fuel cell segments (or fuel cells). The metal-supports, however, need to allow gas diffusion to the electrode (anode or cathode) that is directly connected with the metal-support because otherwise the fuel or oxidizing agent (depending on the configuration) could not reach the corresponding electrode, such that no reaction could take place. Each two neighboring metal-supports, i.e., the metal-supports of two neighboring fuel cell segments, are connected with each other in an electrically isolating manner, e.g., via an electrically nonconductive material, such that the single fuel cell segments are joined together via the connection of the metal-supports to build a stable fuel cell-structure. For example, any suitable electrically isolating material (such as a corresponding spacer) may be arranged between metal-supports of neighboring fuel cell structures and may be connected with the metal-supports in any suitable mechanically stable way, such as by means of an adhesive, of screws, of bolts, or in any other suitable way that ensures electrical isolation between the metal-supports.

Each one of the at least two cathodes (because there are at least two fuel cell segments, and each fuel cell segment comprises a cathode) is electrically connected with an anode of a neighboring fuel cell segment by means of an electrical interconnector. For example, such an electrical interconnector may be a metallic strip, wire, or any other suitable connection element that can conduct an electrical current. By means of these electrical interconnectors, each two neighboring fuel cell segments (which, as described build separate fuel cells within the fuel cell structure (because of the electrical isolation of neighboring components)) are connected in series with each other.

For this, the electrical interconnector may either be connected to the top electrode (i.e., if the anode layer is the layer on top of the electrolyte layer and facing away from the metal-support layer, this would be the anode; if the cathode layer is the layer on top of the electrolyte layer and facing away from the metal-support layer, this would be the cathode) and the bottom electrode (which is the electrode directly in contact with the corresponding metal-support; i.e. if the top electrode is the anode, this would be the cathode; if the top electrode is the cathode, this would be the anode), between the top electrode and the metal-support (acting as current collector), or between the top electrode and the bottom electrode and the metal-support.

The outermost fuel cell segments may then correspondingly be contacted with negative and positive terminals. For example, in a configuration with three fuel cell segments, the first segment (or rather its cathode) may be connected to a negative terminal and the third fuel cell segment (or rather its anode) may be connected to a positive terminal of an electrical load. Depending on the arrangement, i.e., depending on which electrode (anode, cathode) is in contact with the metal-support, the corresponding terminal may also (and preferably) be connected to the corresponding metal-support as a current collector. In a configuration with two fuel cell segments, the first fuel cell segment would be connected to the negative terminal, and the second fuel cell segment would be connected to the positive terminal. In a configuration with four fuel cell segments, the first and the fourth fuel cell segment would be connected with the terminals, and so on. Hence, in a N fuel cell segment configuration, the first and the N-th fuel cell segment would be connected with the corresponding terminals, as described above, while the first fuel cell segment, the intermediate fuel cell segments, and the last fuel cell segment would be connected in series.

The electrolytes within the electrolyte layer (i.e., the electrolytes of the at least two fuel cell segments) may either be electrically isolated, or the electrolyte layer may be a common electrolyte, such that the single electrolytes correspond to sections of such a common electrolyte between the corresponding cathode and the corresponding anode, that are functionally associated with the corresponding fuel cell segments.

From a structural and electrical point of view, the serial connection of multiple fuel cell segments is achieved by interconnecting adjacent fuel cell segments that are arranged in the same plane in which each fuel cell segment extends instead of stacking the fuel cell segments one above the other. The serial connection of multiple fuel cell segments leads to an increased voltage of the fuel cell structure. The interconnection concept between single fuel cell segments in the fuel cell structure provides an integrated networking concept for such metal-supported cells, so that a large number of fuel cell segments may be integrated into a single structure in a way that provides short current collection paths and low weight.

According to an embodiment, the electrolyte-supported fuel cell structure defines a planar fuel cell structure having a flat shape.

In such a flat configuration, one side of the plane defined by the fuel cell structure corresponds to the fuel side while the other side corresponds to the oxidizer/air side. The at least two fuel cell segments are arranged in the plane and side-by-side. In particular, in such a configuration, the first direction, as described further above corresponds to one of the width and the length direction of the planar fuel cell structure while the second direction corresponds to the other one of width and the length direction. In such a configuration, the metal-support layer, the anode-layer, the electrolyte layer and the cathode layer may each be flat layers that are stacked above each other, such that the whole metal-supported fuel cell structure builds a flat shaped with multiple fuel cell segments (fuel cells) arranged next to each other and connected in series to each other.

According to another embodiment, the fuel cell structure comprises a tubular shape defining a tube having an inner side and an outer side, the tube extending in a longitudinal direction.

Such a tubular shape corresponds to a rolled-up version of a flat configuration. In the tubular shape, in contrast to a flat shape, the anode layer, the cathode layer, the electrolyte layer, and the metal-support layer are arranged concentrically around a common central axis instead of parallel to one another. The tubular shape thereby may be any conceivable elongated tube, such as a square tube, a rectangular tube, or a cylindrical tube. The tubular fuel cell structure comprising the anode layer, the cathode layer, the electrolyte layer, and the metal-support layer has a curved shape, such that the fuel cell structure is closed in itself along a circumferential direction. The inner side of the tube is fully encapsulated by the fuel cell structure in circumferential direction. Such a tubular shape further improves the mechanical stability of the fuel cell structure and allows a more compact spacing.

According to another embodiment, the tube is a square tube or a circular tube.

However, these are only examples, and in principle, any other conceivable tube shape is possible.

According to another embodiment, the fuel cell segments are arranged in a grid-like pattern, wherein each of the fuel cell segments is interconnected with a neighboring fuel cell segment via the at least one electrical interconnector.

In this embodiment of the flat or tubular configuration described above, the single fuel cell segments are not just arranged one after the other in one dimension but rather in two dimensions with multiple rows of fuel cell segments when viewed from the top. Each of the fuel cell segments is connected to at least one neighboring fuel cell segments at one of the edges of the fuel cell segments, as described above, For example, in a two-row configuration, the first row may be connected in series along one dimension and the last fuel cell segment of the first row may be connected with the last fuel cell segment of the second row at an edge perpendicular to this dimension. This grid-like connection allows that more fuel cell segments can be placed into a smaller space, thereby further increasing gravimetric power density. In the tubular configuration, the grid-like pattern may be present on the shell of the tube, such as if the flat configuration with the grid-like pattern is rolled up to the tube.

According to another embodiment, the at least one electrical interconnector comprises at least one electrically conductive wire.

Such an electrically conductive wire (in a non-limiting example a silver wire, a platinum wire, or any other suitable wire that can withstand the high temperatures) may, for example be connected with the outer electrode (cathode or anode, depending on the configuration) of at least one fuel cell segment of the metal-supported fuel cell structure. Further, the wire may be connected in any suitable way with the other electrode (anode or cathode) or with the metal-support of a neighboring fuel cell segment. Preferably, the wire is connected with the metal-support because this provides a larger current collection surface from the inner electrode. The wire may be used to connect only two neighboring fuel cell segments, or each two neighboring fuel cell segments may be connected by such a wire. In general, it should be appreciated that any two or more different electrical interconnectors described herein (or not) may be combined, such that, for example, The first and the second fuel cell segment may be connected by one type of interconnector, the second and the third fuel cell segment may be connected by another type of interconnector, and so on. Any suitable combination of interconnectors is possible.

According to another embodiment, the at least one electrically conductive wire is wound around the tube such that it contacts one of the anode and the cathode of at least a first one of the fuel cell segments. The at least one electrically conductive wire, at one of its ends, is connected with the metal-support and/or the other one of the anode and the cathode of a neighboring fuel cell segment, thereby establishing the serial connection between the corresponding fuel cell segments.

In this embodiment, the at least one electrically conductive wire is wound around the tube, however not along the full tube but only in the region of a certain fuel cell segment (although the full tube may be fully covered by wire, but not by the same continuous wire; each wire connects exactly two neighboring fuel cell segments). By winding the wire around the tube at the region of a certain fuel cell segment, the wire repeatedly contacts the outer electrode (anode or cathode, depending on the configuration), thereby providing a relatively large contact surface (current collection surface) without increasing the weight too much. At an end of the wire facing a neighboring fuel cell segment, the wire is connected with the corresponding metal-support and/or the other electrode of the neighboring cell, e.g., by means of a hole/airgap in the cathode layer, the electrolyte layer, and the anode layer, allowing the wire to reach the metal-support. However, it has to be ensured, that the wire does not touch/connect the outer electrode of the neighboring fuel cell segment, because this would connect the neighboring fuel cell segments in parallel.

According to another embodiment, one of the inner side of the tube and the outer side of the tube builds a common fuel channel for supplying the fuel cell structure with fuel. The other one of the inner side of the tube and the outer side of the tube builds a gas channel for supplying the fuel cell structure with an oxidizer.

For example, the inner side of the tube may be supplied with a continuous flow of fuel (such as hydrogen), such that the fuel enters the inner side of the tube at one longitudinal end of the tube and the excess fuel exits the inner side of the tube at the opposite longitudinal end of the tube. In this case, the anode layer is located further inward at the tube, and the cathode layer is located at the outer side of the tube and builds the outer wall of the tube. The fuel then flows by each of the fuel cell segments of the fuel cell structure and supplies each of the fuel cell segments with fuel. The outer side of the tube may be supplied with a continuous flow of an oxidizing agent (such as oxygen or air) that flows by the tube. The fuel oxidation reaction then takes place from the inner side, just as in regular fuel cells.

If the inner side of the tube is the gas channel and the outer side of the tube is the fuel channel, the cathode layer builds the innermost electrode of the tube and the anode layer builds the outer wall of the tube. The reaction then takes place from the outside to the inside.

According to another embodiment, each metal-support comprises an elongated block of a metallic material. Each of the elongated blocks extends in the longitudinal direction within the inner side of the tube. The elongated blocks of neighboring fuel cell segments are joined to each other in an electrically insulating manner. Each of the elongated blocks comprises at least one fluid passage that extends through the corresponding elongated block in the longitudinal direction. The at least one fluid passage defines the common fuel channel or the gas channel.

For example, the tube may be a square tube (however, other shapes are possible, too) and the metal-support may be a substantially solid block of a porous or otherwise diffusion allowing metallic material. Inside the block, there may be at least one hole (fluid passage) that extends through the block along the longitudinal direction of the tube. Neighboring blocks may be connected with each other in an electrically insulating manner in the same way as described herein above, for example by means of a correspondingly formed short block of an insulating material that comprises the same fuel passage pattern as the block or that comprises some kind of "piping holes", if the next block (or rather its fluid passage pattern) is not formed corresponding to the first block (although corresponding patterns are preferred, as described below). The at least one fluid passage than acts as the "inner side" of the tube, as described above. Preferably, multiple fluid passages are provided that run parallel to each other and that are preferably (although not necessarily) spaced evenly within the block. In this way, the fuel (or oxidizing agent, depending on the configuration) may flow through the fluid passages and may diffuse through the porous material of the metal-support (elongated block) towards the inner electrode, to allow the reaction to take place, as described above. The serial connection of the fuel cell segments may be achieved in the same way, as already described above.

According to another embodiment, each of the at least one fluid passage of each of the elongated blocks is flush with a corresponding fluid passage of a neighboring elongated block of a neighboring fuel cell segment, so as to build continuous fluid passages throughout the full length of the metal-supported fuel cell structure.

This allows continuous and straight fuel or oxidizing agent flow throughout the full fuel cell arrangement along the longitudinal direction.

According to another embodiment, each of the metal-supports is made from a porous metallic material.

According to another embodiment, the porous metallic material can be a foam structure or a 3D-printed porous structure. A 3D-printed porous structure may, for example, be a gyroid structure or any other 3D-printed porous structure.

A porous material means that the volume of the metal-supports is not filled to 100 % with the metallic material but rather includes small voids within the volume. These voids allow a gas (such as fuel or oxidizing agent) to diffuse through the metal-supports. A porous metallic material allows a gas diffusion through the metal-supports while simultaneously decreasing the material density and with it the weight of the metal-supports, which further increases gravimetric power density. Further, the small voids allow a big contact surface of the metal-supports to the corresponding electrode (anode or cathode, depending on the configuration), which improves current collection.

However, instead of a porous material, it is, for example, also possible to have a pattern of through holes in a solid metal material. However, the porous material is preferred because of the positive effects to weight, gravimetric power density and current collection, as mentioned above.

According to another embodiment, the at least one electrical interconnector comprises at least one electrically conductive interconnector strip.

Such as strip may, for example, be a thin silver strip, platinum strip, or any other suitable strip, that is connected to the outer electrode of a first fuel cell segment as well as to the inner electrode and/or the metal-support of a neighboring fuel cell segment. Such a strip may be a continuous strip along an edge of the corresponding outer electrode or there may be a plurality of small thin copper strips that are spaced along the corresponding edge. In the latter case, weight is further decreased and gravimetric power density increased accordingly.

According to another embodiment, each two neighboring metal-supports are connected with each other and electrically isolated from each other via a sealant material arranged between the neighboring metal-supports.

Such as sealant material may be any suitable sealant material such as a ceramic material, a glass material, or any other suitable sealant that can withstand the high temperatures. The sealant material may be fixed to the corresponding metal-supports, to fixedly connect the neighboring fuel cell segments to each other, such that a mechanically stable fuel cell structure is built. The sealant material may, for example, be adhesively (or in any other suitable way) bonded to the corresponding metal-supports.

According to another embodiment, the sealant material is a ceramic or glass sealant material.

According to another embodiment, the electrical isolation between the corresponding anodes, as well as the electrical isolation between the corresponding cathodes, is achieved by means of an air gap.

Such an air gap may, for example, be present on the edge of each fuel cell segment above the metal-supports, such that the anodes and the cathodes of each fuel cell segment do not reach to the edge of the metal-support but end earlier.

Additionally, or alternatively, an additional sealant material, such as described above for the sealant material separating the metal-supports, may be present at the edges of the cathode, the anode, and (optionally) the electrolyte of each fuel cell segment.

According to another embodiment, the fuel cell structure is a structure of ceramic solid oxide fuel cells (SOFCs). The electrolyte layer comprises an oxide conducting ceramic electrolyte.

According to another embodiment, the metal-supports may be made from high temperature stable iron chromite stainless steel or Inconel based material.

According to another embodiment, a thermal expansion coefficient of the metal-supports matches with other ceramic components used in the cell.

According to another aspect, an aircraft having a fuselage, at least one electrical load, and at least one metal-supported fuel cell structure as described in any one of the above embodiments, is provided. The at least one electrical load is connected with a negative terminal and a positive terminal of the at least one metal-supported fuel cell structure.

In summary, the present disclosure provides a metal-supported fuel cell structure that is mechanically stable (because of the high percentage of metallic structures in the metal-supported fuel cell structure) and that provides a high gravimetric power density (power per weight ratio). The fuel cell structure further provides fast startup times due to limited ceramic components and can be manufactured with a simplified manufacturing concept. The disclosed metal-supported fuel cell structure is feasible to achieve a high current density at low operating temperatures and the disclosed structure is able to produce longer tubular cells, for example in the range of up to 110 mm with 10 repeating fuel cell segments. Further, the fuel cell structure allows to produce individual unit cells with joining the cells afterwards, which simplifies the masking and coating techniques necessary. In the disclosed design, the single cells (fuel cell segments) are connected in series without the need for fuel cell stacking and can achieve high voltages and maintain optimal current densities throughout the cell length. In general, the gravimetric power density of a fuel cell (or fuel cell structure) is based on the weight of the cell (or cells in the structure) and the power output. The weight of the cells may be calculated by means of the material densities, thicknesses of the layers, the porosity of the electrodes (anode, cathode) as well as of the metal support structure, and the length and general dimensions of the cell). The power output may be calculated by the product of the current density (A/cm²), the voltage (V), and the active surface (cm²). In particular, the disclosed metal-supported fuel cell structure may achieve gravimetric power densities in the range of 12 - 25kW/kg (with an optimal current density (2.5 A/cm² to 3.8 A/cm²) assuming each unit cell provides a voltage of 0.75 V at an operating temperature between 650 to 750 °C), which is a world record that could so far not be achieved. Such a gravimetric power density is equivalent to state of the art combustion jet engines. Increasing gravimetric power density is key enabler for fuel cell technology on board for aircraft applications.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic cut view of a solid oxide metal-supported fuel cell structure either in a flat shape or in a tubular shape having interconnector strips as electrical interconnectors.
- **Fig. 2**: a schematic top view of a flat solid oxide metal-supported fuel cell structure implementing a grid-like pattern.
- **Fig. 3**: a schematic isometric view of a tubular solid oxide fuel cell structure implementing a square tube having elongated blocks with fluid passages as metal-supports.
- **Fig. 4**: a schematic cut view of a solid oxide metal-supported fuel cell structure in a tubular shape having electrically conductive wires as electrical interconnectors.
- **Fig. 5**: a schematic top view of the metal-supported fuel cell structure of Fig. 4.
- **Fig. 6**: an aircraft comprising a metal-supported fuel cell structure and an electrical load connected to the fuel cell structure.

### DETAILLED DESCRIPTION

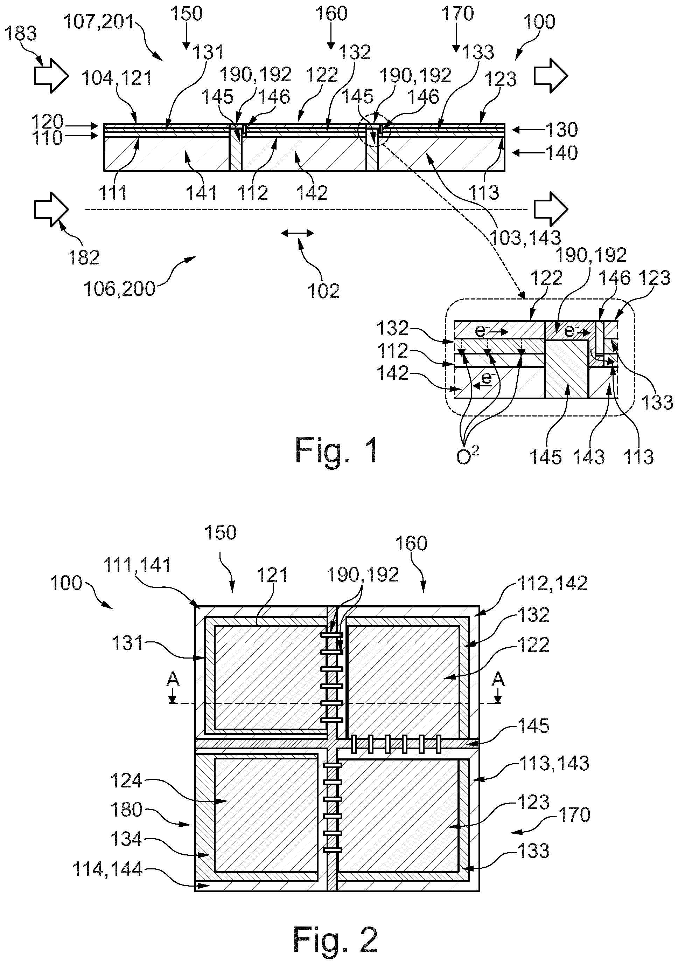

Fig. 1 shows a schematic cut view of a solid oxide metal-supported fuel cell structure 10, either in a flat shape or in a tubular shape, having interconnector strips 192 as electrical interconnectors 190.

The fuel cell structure 100 of Fig. 1 comprises a first fuel cell segment 150, a second fuel cell segment 160, and a third fuel cell segment 170, each building fully functional solid oxide fuel cells that are arranged side-by-side and that build a serial connection with each other. Each of the fuel cell segments 150, 160, 170 comprises an anode, an electrolyte, a cathode and a metal-support. In particular, the first fuel cell segment comprises an first cathode 121, a first electrolyte 131, a first anode 111, and a first metal-support 141; the second fuel cell segment 160 comprises a second cathode 122, a second electrolyte 132, a second anode 112, and a second metal-support 142; and the third fuel cell segment comprises a third cathode 123, a third electrolyte 133, a third anode 113, and a third metal-support 143. The anodes 111, 112, 113 each lie in a common anode layer 110 but are electrically isolated from each other (in particular, are not directly touching each other). The cathodes 121, 122, 123 each lie in a common anode layer 120 but are electrically isolated from each other (in particular, are not directly touching each other). In the same way, each of the electrolytes 131, 132, 133 lie in a common electrolyte layer 130 but are electrically isolated from each other, although it is also conceivable that the electrolyte layer is a continuous layer over the full fuel cell structure 100.

The metal-support 141, 142, 143 also build a metal-support layer 140 in the same way. For better visibility, the connection between two of the fuel cell segments 150, 160, 170, in particular between the second fuel cell segment 160 and the third fuel cell segment 170, is illustrated in an enlarged view.

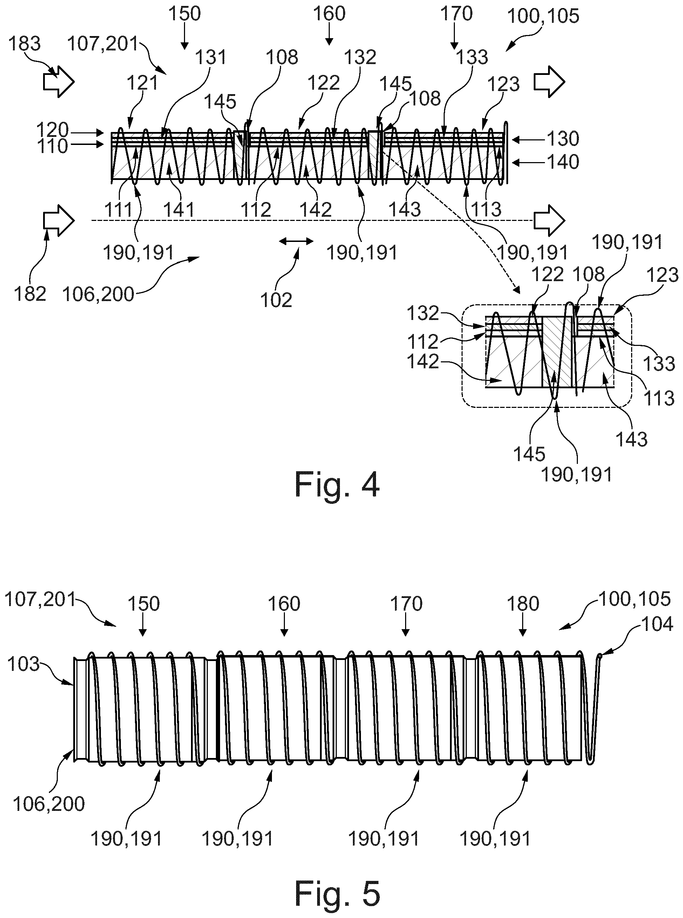

Each two neighboring ones of the metal-supports 141, 142, and 143 are electrically isolated but connected with each other in a mechanical stable way by means of sealant materials 145. This means, the first metal-support 141 is connected and electrically isolated from the second metal-support 142 and the second metal-support 142 is connected in the same way with the third metal-support 143. The sealant material may be any mechanically stable material suitable for electrically isolating the corresponding components. The sealant material may, for example, be a corresponding electrically isolating material such as a glass or a ceramic sealant material. However, any other suitable sealant material is possible. The sealant material may, for example, be connected to the neighboring metal-supports via an adhesive or in any other mechanically stable way that ensures electrical isolation. In the depicted configuration, the neighboring anodes are additionally separated/isolated from each other by a second sealant material 146, which may be configured similar to the first sealant material 145. However, neighboring anodes and neighboring cathodes may also be isolated from each other in any other suitable way, for example by providing an air gap 108 (such as in Fig. 4).

Each one of the cathodes 121, 122, 123 except the third and last cathode 123 is connected with a neighboring anode 111, 112, 113 (except with the first anode 111) via an electrical interconnector 190, here in the form of electrically conductive interconnector strips 192. Such interconnector strips 192 may for example be thin electrically conductive strips 192, such as copper strips in a non-limiting example. Other examples for electrical interconnectors 190 would be conductive pastes, for example made from Platinum or Silver. In particular, the first cathode 121 is connected with the second anode 112 and/or the second metal-support 142 (because the metal-supports 141, 142, 143 are in direct electrical contact with the anodes 111, 112, 113 and act as current collectors, such a connection with the metal-supports 141, 142, 143 therefore even is preferred because it allows for current collection over a large plane), and the second cathode 122 is connected with the third anode 113 and/or the third metal-support 143. Therefore, a serial connection of each of the fuel cell segments 150, 160, 170 is achieved.

The first cathode 121, being the negative electrode of the first fuel cell segment 150, may simultaneously define a negative terminal 104 for connecting the fuel cell structure to an electrical load. Further, the third (or in general the last, if more than three fuel cell segments 150, 160, 170 are present) anode 113 (building the positive electrode of the third fuel cell segment 170) and/or metal-support 143 acts as a positive terminal 103 for connecting an electrical load.

In the configuration depicted in Fig. 1, the top side acts as a gas channel 201 for an oxidizing agent (such as oxygen or air) and the bottom side acts as fuel channel 200 for a fuel, such as hydrogen. This means, a fuel flow 182 may be directed along the bottom side and an air flow 183 may be directed along the top side. The metal-supports 141, 142, 143 each allow gas diffusion through them, such that the fuel can penetrate the metal-supports 141, 142, 143 and reach the anodes 111, 112, 113. For example, the metal-supports 141, 142, 143 may preferably be made from a porous metallic material, such that a large contact surface to the anodes 111, 112, 113 is provided (for good current collection) while simultaneously allowing for good gas diffusion. Further, the cathodes 121, 122, 123 are porous, to allow gas diffusion.

The side-by-side configuration of fuel cell segments 150, 160, 170 (which each build fully functional fuel cells) and the serial connection of the fuel cell segments 150, 160, 170 allow for low weight with regard to classical stacked configurations while providing high power. This provides a high gravimetric power density (power per weigth) compard to classical configurations. In particular, by using a metal-support (instead of, for example, a ceramic support, current collection is greatly improved because electrons are captured over the full area of the corresponding electrode layer that is in contact with the metal-support).

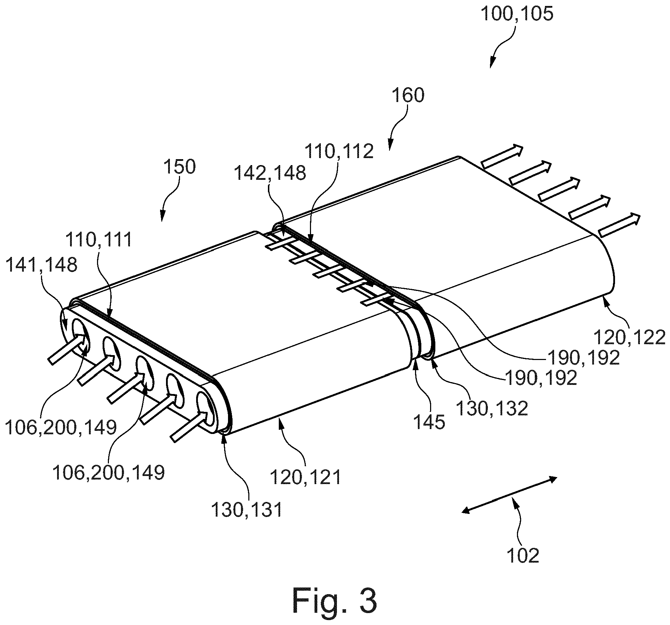

Although shown in Fig. 1 with three fuel cell segments 150, 160, 170, it should be appreciated that any other number of fuel cell segments may be used. The configuration of Fig. 1 is a cross sectional view of a fuel cell structure 100 and can, for example, be a cross sectional view of a flat structure (such as in Fig. 2) or of a tubular structure (such as in Fig. 3 to 5). In such tubular configurations, the layered structure as shown in Fig. 1 is rolled up to build concentrical layers of the tube. Therefore, for such configurations, the cross-sectional view of Fig. 1 only shows one half of a cut through such a tube, as will be readily apparent. In tubular configurations, the fuel channel 200 builds an inner side of the tube 105 (see Fig. 3 to 5) and the gas channel 201 builds an outer side 107 of the tube 105.

Further, it should be appreciated that the arrangement of the anode layer 110 and the cathode layer 120 may be reversed, such that the anode layer 110 is on the top side / outer side 107 (in tubular configurations) and the cathode layer 120 is on the bottom side / inner side 106 (in tubular configurations). In such configurations, instead of the anodes 111, 112, 113, the cathodes 121, 122, 123 would be in contact with the corresponding metal-supports 141, 142, 143. Further, it is conceivable, that the metal-support layer 140 is arranged at the outer side 107 of such a tube and the arrangement of the anode layer 110, the cathode layer 120, and the electrolyte layer 130 is disposed onto the metal-support layer 140 such that it extends towards the inner side 106 of the tube. Any such configurations are conceivable in principle.

Fig. 2 shows a schematic top view of a flat solid oxide metal-supported fuel cell structure 100 implementing a grid-like pattern. In this configuration, multiple fuel cell segments, such as the depicted four fuel cell segments 150, 160, 170, 180, are arranged within a plane an in a grid-like pattern building multiple rows (in the shown configuration two rows) of fuel cell segments. The cross section within one of the rows then corresponds to the cross section shown in Fig. 1, for example when taken along cut line A-A in Fig. 2 (although in Fig. 1 three fuel cell segments 150, 160, 170 are shown whereas the cut line A-A would only consist of two fuel cell segments 150, 160). Each of the fuel cell segments then is configured as described with regard to Fig. 1. Therefore, the corresponding description will not be repeated here. The reference signs in Fig. 2 correspond to the reference signs of Fig. 1 with the addition of the fourth fuel cell segment 180 having a fourth anode 114, a firth cathode 123, a fourth electrolyte 134, and a fourth metal-support 144. The discussion with regard to Fig. 1 is fully valid for Fig. 2, too. However, in Fig. 2, the second fuel cell segment 160 (in the first row) is connected with the third fuel cell segment 170 (in the second row) along an edge that is perpendicular to the connection edge between the first fuel cell segment 150 and the second fuel cell segment 160. The sealant material 145 is present between each two neighboring ones of the fuel cell segments 150, 160, 170, 180. As will be appreciated, this configuration allows add many fuel cell segments onto a relatively small area that are each connected in series, thereby providing an especially high gravimetric power density.

Although the electrical interconnectors 190 in Fig. 2 are shown as multiple small strips 192, it should be appreciated that instead of such small strips 192, one large strip extending along the total length of the corresponding edge could in principle also be used, although this would increase weight.

Fig. 3 shows a schematic isometric view of a tubular solid oxide fuel cell structure 100 implementing a square tube 105 having metal-supports 141, 142 in the form of elongated blocks 148 with fluid passages 149. The layered structure of each of the sides of the tube 105 in Fig. 3 corresponds to the cross sectional view of Fig. 1. However, the metal-supports 141, 142 are not flat metal-supports but blocks 148 that comprise multiple fluid passages 149 (only two indicated by reference signs for clarity) that extend along a longitudinal direction 102 of the tube 105. The material of the metal-supports may also be a diffusion allowing, for example porous, metallic material, such that gas travelling through the fluid passages 149 can reach the anode layer 110. The fluid passages 149 together correspond to the inner side 106 of the tube 105 and provide a fuel channel 200 (or gas channel 201 for an oxidizer, depending on the configuration of the anode layer 110 and the cathode layer 120 (meaning their arrangement), as described with regard to Fig. 1) for providing fuel to the fuel cell segments 150, 160. It should be appreciated that the number of fuel cell segments may be higher than two. The first fuel cell segment 150 and the second fuel cell segment 160 are connected in the same was as in Fig. 1 and 2 by means of electrically conductive interconnector strips 192 connecting the first cathode 121 with the second metal-support 142 and/or anode 112 (disposed directly on the second metal-support 142). The second metal-supports 142 is configured in the same way as the first metal-support 141 in the form of an elongated block 148 that comprises fluid passages 149 that are flush with the fluid passages 149 of the first metal-support 141. Also, the sealant material 145 joining the first metal-support 141 and the second metal-support 142 also comprises the same pattern of fluid passages 149, such that continuous fluid passages 149 along the full length of the fuel cell structure 100 are provided.

It should be appreciated that the tube 105 having such fluid passages 149 does not necessarily have to be flat/squared but also could be circular in cross section and the multiple such fluid passages 149 could be provided within such a tube 105 in any suitable pattern.

Fig. 4 shows a schematic cut view of another implementation of a solid oxide metal-supported fuel cell structure 100 in a tubular shape having electrically conductive wires 191 as electrical interconnectors 190. This configuration is substantially similar to the configuration of Fig. 1. The discussion of identical elements as in Fig. 1 therefore will not be repeated.

Instead of the interconnector strips 192 in Fig. 1, the configuration of Fig. 4 comprises electrically conductive wires 191 as electrical interconnectors 190 between neighboring fuel cell segments 150, 160 or 160, 170. One electrically conductive wire 191 (in the following just "wire") is wound around each fuel cell segment 150, 160, 170 such that the corresponding wire 191 is in contact with the outer electrode (in the depicted example the corresponding cathode 121, 122, and 123 of the corresponding fuel cell segment 150, 160, 170). Therefore, each corresponding wire 191 acts as a current collector for the corresponding cathode 121, 122, 123. Each of the wires 191 (except the last wire 191) is connected with the metal-support 142, 143 of a neighboring fuel cell segment 160, 170. For this, for example, a hole / air gap 108 may be provided in the corresponding cathode 122, 123 and the corresponding electrolyte 132, 133, such that the wire may be in contact with the corresponding metal-support 142, 143. For example, the air gap 108 may be provided along the circumference of the corresponding fuel cell segment 160, 170, such that it may be wound directly onto the metal-support 142, 143. Thereby, it has to be ensured that the wire 191 of the previous fuel cell segment 150, 160 does not contact the cathode 122, 123 of the following fuel cell segment 160, 170. This provides a serial connection between the fuel cell segments 150, 160, 170.

Optionally, the air gaps 108 may, for example, be filled with a resin, to ensure electrical insulation.

Fig. 5 shows the fuel cell structure 100 of Fig. 4 in a top view. Here, it can be seen how the wires 191 are wound around the tube 105. The first metal-support 141 may build a positive terminal 103 and the end of the last wire 191 may provide a negative terminal 104 to provide a connection to an electrical load.

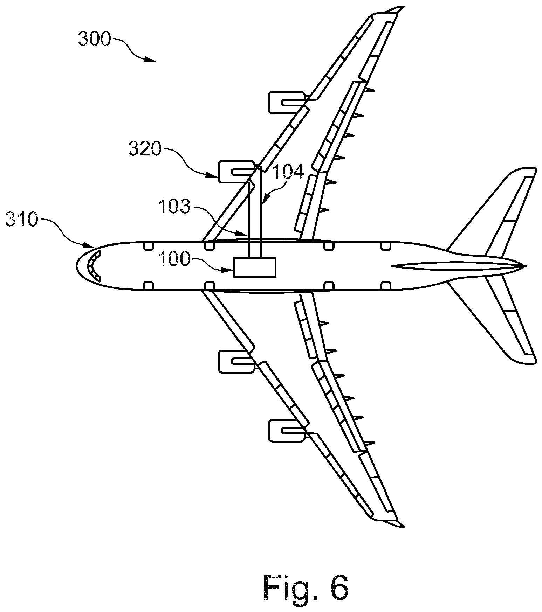

Fig. 6 schematically shows an aircraft 300. The aircraft 300 comprises a fuselage 310, an electrical load 320 in the form of an electrical turbine and a metal-supported fuel cell structure 100 as described herein. The electrical load 320 is connected with a positive terminal 103 and a negative terminal 104 of the fuel cell structure 100, such that the fuel cell structure 100 provides electrical power to the electrical load 320.

The electrical load 320 may be any load 320 that need electrical energy to operate, such as, for example, cabin equipment or electrical propulsion systems such as electrical turbines, or any other electrical load 320. The electrical load 320 may be arranged within or outside the fuselage 310.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: metal-supported fuel cell structure
- 101: first direction, circumferential direction
- 102: second direction, longitudinal direction
- 103: positive terminal
- 104: negative terminal
- 105: tube
- 106: inner side of the tube
- 107: outer side of the tube
- 108: air gap
- 110: anode layer
- 111: first anode
- 112: second anode
- 113: third anode
- 114: fourth anode
- 120: cathode layer
- 121: first cathode
- 122: second cathode
- 123: third cathode
- 124: fourth cathode
- 130: electrolyte layer
- 131: first electrolyte
- 132: second electrolyte
- 133: third electrolyte
- 134: fourth electrolyte
- 140: metal-support layer
- 141: first metal-support
- 142: second metal-support
- 143: third metal-support
- 144: fourth metal-support
- 145: first sealant material
- 146: second sealant material
- 148: elongated block
- 149: fluid passages
- 150: first fuel cell segment
- 160: second fuel cell segment
- 170: third fuel cell segment
- 180: fourth fuel cell segment
- 182: fuel flow
- 183: air flow
- 190: electrical interconnector
- 191: electrically conductive wire
- 192: interconnector strips
- 200: fuel channel
- 201: gas channel
- A-A: cut line

- 300: aircraft
- 310: fuselage
- 320: electrical load

## Claims

1. A metal-supported fuel cell structure (100), comprising at least a two fuel cell segments (150, 160), wherein each of the at least two fuel cell segments (150, 160, 170, 180) are arranged neighboring each other, and wherein each of the at least two fuel cell segments (150, 160) comprises:
an anode (111, 112, 113, 114);
a cathode (121, 122, 123, 124);
an electrolyte (131, 132, 133, 134) interposed between the corresponding anode (111, 112) and the corresponding cathode (121, 122, 123, 124); and
a metal-support (141, 142, 143, 144);
wherein all the anodes (111, 112, 113, 114) together build an anode layer (110), and wherein the corresponding anodes (111, 112, 113, 114) of neighboring fuel cell segments (150, 160, 170, 180) within the anode layer (110) are electrically isolated from each other;
wherein all the cathodes (121, 122, 123, 124) together build a cathode layer (120), and wherein the corresponding cathodes (121, 122, 123, 124) of neighboring fuel cell segment (150, 160, 170, 180) within the cathode layer (120) are electrically isolated from each other;
wherein all the electrolytes (131, 132, 133, 144) together build an electrolyte layer (130);
wherein all the metal-supports (141, 142, 143, 144) together build a metal-support layer (140), and wherein the corresponding metal-supports (141, 142, 143, 144) of neighboring fuel cell segment (150, 160, 170, 180) within the metal-support layer (140) are electrically isolated from each other;
wherein the metal-support layer (140) provides a mechanical support for the fuel cell structure (100);
wherein and arrangement of the anode layer (110), the cathode layer (120) and the electrolyte layer (130) is disposed on a surface of the metal-support layer (140);
wherein the cathode (121, 122, 123, 124) or the anode (111, 112, 113, 114) of at least one of the fuel cell segments (150, 160, 170, 180) is electrically interconnected, via at least one electrical interconnector (190), with the anode (111, 112, 113, 114) or the cathode (121, 122, 123, 124), respectively, and/or the metal-support (141, 142, 143, 144) of a neighboring fuel cell segment (150, 160, 170, 180), thereby establishing a serial connection between the corresponding fuel cell segments (150, 160, 170, 180).

2. The metal-supported fuel cell structure (100) of claim 1, wherein the electrolyte-supported fuel cell structure (100) defines a planar fuel cell structure (100) having a flat shape.

3. The metal-supported fuel cell structure (100) of claim 1, the fuel cell structure (100) comprising a tubular shape defining a tube (105) having an inner side (106) and an outer side (107), the tube (105) extending in a longitudinal direction (102).

4. The metal-supported fuel cell structure (100) of claim 3, wherein the tube (105) is a square tube or a circular tube.

5. The metal-supported fuel cell structure (100) of any one of the preceding claims, wherein the fuel cell segments (150, 160, 170, 180) are arranged in a grid-like pattern, wherein each of the fuel cell segments (150, 160, 170, 180) is interconnected with a neighboring fuel cell segment (150, 160, 170, 180) via the at least one electrical interconnector (190).

6. The metal-supported fuel cell structure (100) of any one of the preceding claims, wherein the at least one electrical interconnector (190) comprises at least one electrically conductive wire (191).

7. The metal-supported fuel cell structure (100) of claim 6, wherein the at least one electrically conductive wire (191) is wound around the tube (105) such that it contacts one of the anode (111, 112, 113, 114) and the cathode (121, 122, 123, 124) of at least a first one of the fuel cell segments (150, 160, 170, 180); and
wherein the at least one electrically conductive wire (191), at one of its ends, is connected with the metal-support (141, 142, 134, 144) and/or the other one of the anode (111, 112, 113, 114) and the cathode (121, 122, 123, 124) of a neighboring fuel cell segment (150, 160, 170, 180), thereby establishing the serial connection between the corresponding fuel cell segments (150, 160, 170, 180).

8. The metal-supported fuel cell structure (100) of any one of claims 3 to 7, wherein one of the inner side (106) of the tube (105) and the outer side (107) of the tube (105) builds a common fuel channel (200) for supplying the fuel cell structure (100) with fuel; and
wherein the other one of the inner side (106) of the tube (105) and the outer side (107) of the tube (105) builds a gas channel (201) for supplying the fuel cell structure (100) with an oxidizer.

9. The metal-supported fuel cell structure (100) of claim 8, wherein each metal-support (141, 142, 143, 144) comprises an elongated block (148) of a metallic material, and each of the elongated blocks (148) extending in the longitudinal direction (102) within the inner side (106) of the tube (105);
wherein the elongated blocks (148) of neighboring fuel cell segments (150, 160, 170, 180) are joined to each other in an electrically insulating manner;
wherein each of the elongated blocks (148) comprises at least one fluid passage (149) that extends through the corresponding elongated block (148) in the longitudinal direction (102); and
wherein the at least one fluid passage (149) defines the common fuel channel (200) or the gas channel (201).

10. The metal-supported fuel cell structure (100) of claim 9, wherein each of the at least one fluid passage (149) of each of the elongated blocks (148) is flush with a corresponding fluid passage (149) of a neighboring elongated block (148) of a neighboring fuel cell segment (150, 160, 170, 180), so as to build continuous fluid passages (149) throughout the full length of the metal-supported fuel cell structure (100).

11. The metal-supported fuel cell structure (100) of any one of the preceding claims, wherein each of the metal-supports (141, 142, 143, 144) is made from a porous metallic material.

12. The metal-supported fuel cell structure (100) of any one of the preceding claims, wherein the at least one electrical interconnector (190) comprises at least one electrically conductive interconnector strip (192).

13. The metal-supported fuel cell structure (100) of any one of the preceding claims, wherein each two neighboring metal-supports (141, 142, 143, 144) are connected with each other and electrically isolated from each other via a sealant material (145) arranged between the neighboring metal-supports (141, 142, 143, 144).

14. The metal-supported fuel cell structure (100) of claim 11, wherein the sealant material (145) is a ceramic or glass sealant material.

15. The metal-supported fuel cell structure (100) of any one of the preceding claims, wherein the electrical isolation between the corresponding anodes (111, 112, 113, 114), as well as the electrical isolation between the corresponding cathodes (121, 122, 123, 124), is achieved by means of an air gap (108).

16. Aircraft (300), comprising:
a fuselage (310);
at least one electrical load (320); and
at least one metal-supported fuel cell structure (100) of any one of claims 1 to 15;
wherein the at least one electrical load (320) is connected to a positive terminal (103) and a negative terminal (104) of the at least one metal-supported fuel cell structure (100), such that the metal-supported fuel cell structure (100) provides electrical power to the at least one electrical load (320).
